# EUROPÄISCHE PATENTSCHRIFT

(11) **EP 0 485 336 B1**
(45) Veröffentlichungstag und Bekanntmachung des Hinweises auf die Patenterteilung: **26.03.1997**
(21) Anmeldenummer: 91810837.4
(22) Anmeldetag: 29.10.1991
(51) Int. Cl.: C09B 67/22, C09B 62/04, C09B 62/20, D06P 1/382, D06P 3/66

(54) **Reaktivfarbstoffmischungen, Verfahren zu deren Herstellung und deren Verwendung**
Mixtures of reactive dyes, process for their preparation and their utilization
Mélanges de colorants réactifs, procédé pour leur préparation et leur utilisation

(30) Priorität: 06.11.1990 CH 3512/90
(43) Veröffentlichungstag der Anmeldung: 13.05.1992
(73) Patentinhaber: Ciba Specialty Chemicals Holding Inc., 4057 Basel (CH)
(72) Erfinder: Aeschlimann, Peter, CH-4123 Allschwil (CH); Herzig, Paul, CH-4057 Basel (CH); Tzikas, Athanassios, Dr., CH-4133 Pratteln (CH)

(56) Entgegenhaltungen:
- EP-A- 0 135 381
- EP-A- 0 144 580
- DE-A- 3 542 025

## Beschreibung

Reaktivfarbstoffe werden seit langem in grossem Umfang für das Färben und Bedrucken von Textilien aus Fasermaterialien eingesetzt, und es steht heute eine grosse Anzahl von brauchbaren Reaktivfarbstoffen mit unterschiedlichen Eigenschaften und für verschiedene Anwendungsbereiche zur Verfügung. Angesichts der immer höheren Anforderungen an Reaktivfärbungen in bezug auf Wirtschaftlichkeit, Applikationstechnik und Echtheitsniveau ist der erreichte technische Stand aber vielfach nicht voll befriedigend.

So ist z.B. häufig festzustellen, dass der Fixiergrad zu gering, und die Differenz zwischen Ausziehgrad und Fixiergrad zu gross ist (hoher Seifverlust), so dass ein erheblicher Teil des Reaktivfarbstoffes für den Färbevorgang verloren geht. Ferner lässt das Aufbauvermögen in vielen Fällen zu wünschen übrig.

Der vorliegenden Erfindung lag die Aufgabe zugrunde, neue verbesserte Reaktivfarbstoffe zu finden, die eine hohe Reaktivität und ein gutes Aufbauvermögen besitzen, die mit hoher Fixierausbeute gefärbt werden können, die vor allem für das Ausziehfärbeverfahren geeignet sind, und die auf cellulosehaltigem Fasermaterial nass- und lichtechte Färbungen ergeben.

Es hat sich gezeigt, dass die weiter unten definierten neuen Reaktivfarbstoffmischungen diesen Anforderungen genügen.

Gegenstand der Erfindung sind Reaktivfarbstoffmischungen, enthaltend die Reaktivfarbstoffe der Formeln 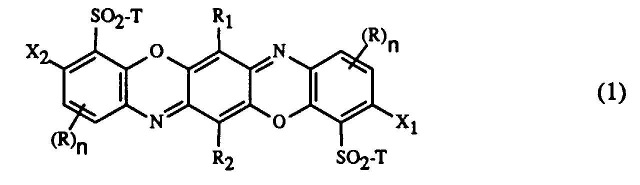 und 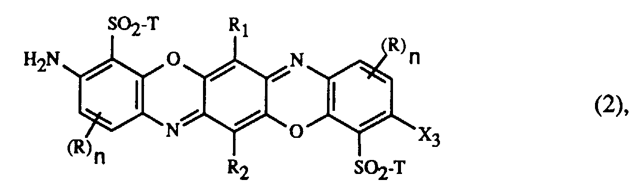 worin R₁ und R₂ Wasserstoff, Chlor, Brom, C₁-C₄-Alkyl, C₁-C₄-Alkoxy oder gegebenenfalls substituiertes Phenyl oder gegebenenfalls substituiertes Phenoxy bedeuten, (R)ₙ für n Substituenten R steht, die unabhängig voneinander C₁-C₄-Alkyl, C₁-C₄-Alkoxy, Halogen, Sulfo, Carboxy, Carbamoyl, N-C₁-C₄-Alkylcarbamoyl, N,N-Di-C₁-C₄-alkylcarbamoyl, C₁-C₄-Alkylsulfonyl, Sulfamoyl, N-C₁-C₄-Alkylsulfamoyl oder N,N-Di-C₁-C₄-alkylsulfamoyl sein können, n = 0, 1 oder 2, T Hydroxy oder C₁-C₆-Alkyl, das durch Hydroxy, Carboxy, Sulfo, Sulfato, Chlor, C₁-C₄-Alkoxy, Carbamoyl, Sulfamoyl oder einen Rest der Formel 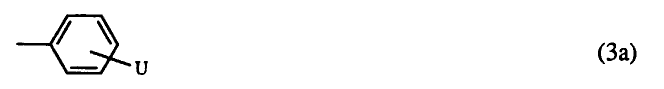 oder 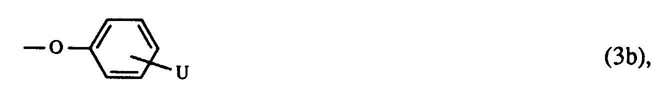 worin U Wasserstoff, Sulfo, Sulfato, Hydroxy oder Carboxy ist, substituiert sein kann, ist, oder T ein Rest der Formel 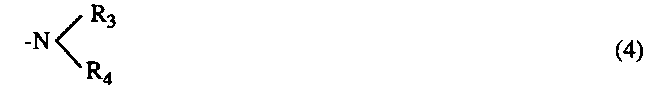 ist, worin R₃ Wasserstoff oder gegebenenfalls substituiertes C₁-C₄-Alkyl, R₄ Wasserstoff oder C₁-C₆-Alkyl, das durch Hydroxy, Carboxy, Sulfo, Sulfato, Chlor, C₁-C₄-Alkoxy, Carbamoyl, Sulfamoyl oder einen Rest der Formel (3a) oder (3b), worin U die angegebene Bedeutung hat, substituiert sein kann, X₁, X₂ und X₃ unabhängig voneinander je ein Rest der Formel 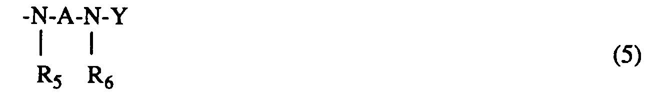 ist, worin R₅ und R₆ unabhängig voneinander Wasserstoff oder gegebenenfalls substituiertes C₁-C₄-Alkyl, A C₂-C₄-Alkylen, das durch Halogen, Hydroxy, Carboxy, Sulfo, Phenyl, Sulfophenyl oder C₁-C₄-Alkoxycarbonyl substituiert sein kann, oder Cyclohexylen ist, das durch C₁-C₄-Alkyl substituiert sein kann, oder worin die Gruppe -N(R₅)-A-N(R₆)- 1,4-Piperazindiyl ist, und Y ein Reaktivrest ist.

Neben den oben genannten Farbstoffen der Formeln (1) und (2) können die Mischungen auch noch kleinere Anteile von Verbindungen der Formel 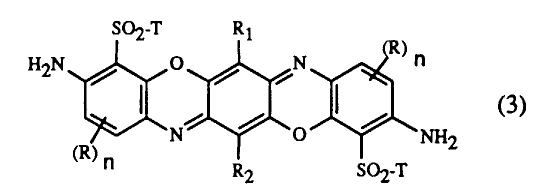 enthalten, worin die Bedeutungen der einzelnen Substituenten wie oben angegeben sind.

Als C₁-C₄-Alkyl kommt für R₁ und R₂ z.B. in Betracht: Methyl, Ethyl, n-Propyl, Isopropyl, n-Butyl, sek.-Butyl, Isobutyl oder tert.-Butyl.

Als C₁-C₄-Alkoxy kommt für R₁ und R₂ z.B. in Betracht: Methoxy, Ethoxy, n-Propoxy, Isopropoxy, n-Butoxy, sek.-Butoxy, Isobutoxy oder tert.-Butoxy.

Bedeuten R₁ und R₂ einen Phenylrest oder einen Phenoxyrest, so kann dieser Rest weitersubstituiert sein z.B. durch Halogen, wie Fluor, Chlor oder Brom, C₁-C₄-Alkyl, wie Methyl, Ethyl, Propyl, Isopropyl oder Butyl, C₁-C₄-Alkoxy, wie Methoxy oder Ethoxy, Nitro, Carboxy oder Sulfo.

Mögliche Substituenten R sind z.B. Methyl, Ethyl, Propyl, Isopropyl, Butyl, Isobutyl, sec.-Butyl, tert.-Butyl, Methoxy, Ethoxy, Propyloxy, Isopropyloxy, Butyloxy, Isobutyloxy, sec.-Butyloxy, tert.-Butyloxy, Fluor, Chlor, Brom, Carboxy, Carbamoyl, N-Methylcarbamoyl, N-Ethylcarbamoyl, N,N-Dimethylcarbamoyl, N,N-Diethylcarbamoyl, Methylsulfonyl, Ethylsulfonyl, Sulfamoyl, N-Methylsulfamoyl, N-Ethylsulfamoyl, N,N-Dimethylsulfamoyl oder N,N-Diethylsulfamoyl.

Als C₁-C₄-Alkyl kommt für R₃, R₅ und R₆ in Formeln (4) und (5) ein geradkettiger oder verzweigter Alkylrest in Betracht, der auch substituiert sein kann, z.B. durch Halogen, Hydroxy, Cyan, Sulfo oder Sulfato. Als Beispiele seien genannt: Methyl, Ethyl, Propyl, Isopropyl, Butyl, Isobutyl, sek.-Butyl, tert.-Butyl, β-Chlorethyl, β-Hydroxyethyl, β-Hydroxybutyl, β-Cyanethyl, Sulfomethyl, β-Sulfoethyl oder β-Sulfatoethyl.

Als C₁-C₆-Alkyl kommt für T und R₄ in Formel (5) z.B. in Betracht: Methyl, Ethyl, n-Propyl, Isopropyl, n-Butyl, sek.-Butyl, Isobutyl, tert.-Butyl oder n-Hexyl sowie die wie angegeben substituierten Reste, wie z.B. . β-Chlorethyl, β-Hydroxyethyl, β-Hydroxybutyl, Sulfomethyl, β-Sulfoethyl oder β-Sulfatoethyl.

Das Brückenglied A kann geradkettig oder verzweigt sein, und, wie oben angegeben, weitersubstituiert sein. Als Beispiele für A seien genannt: Ethylen, 1,2- und 1,3-Propylen, 2-Hydroxy-1,3-propylen, 2-Sulfato-1,3-propylen, 1- und 2-Phenyl-1,3-propylen, 2-(4'-Sulfophenyl)-1,3-propylen, 1,4-, 2,3- und 2,4-Butylen, 2-Methyl-1,3-propylen, 1-Chloro-2,3-propylen, 2,3-Diphenyl-1,4-butylen, 1,3-Cyclohexylen, 1,4-Cyclohexylen, 4-Methyl-1,3-cyclohexylen, 2-Methyl-1,3-cyclohexylen, 5,5-Dimethyl-1,3-cyclohexylen, 2-Methyl-1,4-cyclohexylen, 4-6-Dimethyl-1,3-cyclohexylen, 4-Methyl-1,2-cyclohexylen oder 1,4-Piperazindiyl.

Für die erfindungsgemässen Farbstoffmischungen geeignete Reaktivgruppen Y in Formel (5) sind insbesondere heterocyclische, welche mindestens einen abspaltbaren Substituenten an einen heterocyclischen Rest gebunden enthalten, unter anderem solche, die mindestens einen reaktiven Substituenten an einen 5- oder 6-gliedrigen heterocyclischen Ring gebunden enthalten, wie an einen Monazin-, Diazin-, Triazin- z.B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinazolin-, Chinoxalin-, Acridin-, Phenazin- und Phenanthridin-Ring-System; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen: Halogen (Cl, Br oder F), Ammonium einschliesslich Hydrazinium, Sulfonium, Sulfonyl, Azido-(N₃), Rhodanido, Thio, Thioether, Oxyether, Sulfinsäure und Sulfonsäure. Im einzelnen sind beispielsweise zu nennen:

Mono- oder Dihalogen-symmetrische-triazinylreste, z.B. 2,4-Dichlortriazinyl-6-, 2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlor-triazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-(2',4'-Disulfophenyl)-amino-4-chlor-triazinyl-6, 2-(2',5'-Disulfophenyl)-amino-4-chlor-triazinyl-6, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlor-triazinyl-6-, 3-(4'-Methylphenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlor-triazinyl-6-, 2,4-Difluor-triazinyl-6-, Monofluortriazinylreste, die durch Amino-, Alkylamino-, Aralkylamino-, Acylaminogruppen substituiert sind, wobei Alkyl, insbesondere gegebenenfalls substituiertes C₁-C₄-Alkyl, Aralkyl, insbesondere gegebenenfalls substituiertes Phenyl-, C₁-C₄-Alkyl und Aryl, insbesondere gegebenenfalls durch Sulfo-, Alkyl-, insbesondere C₁-C₄-Alkyl-, Alkoxy, insbesondere C₁-C₄-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethyl-amino-4-fluor-triazinyl-6, 2-iso-Propylamino-4-fluortriazinyl-6, 2-Dimethylamino-4-fluor-triazinyl-6, 2-Diethylamino-4-fluor-triazinyl-6, 2-β-Methoxy-ethylamino-4-fluortriazinyl-6, 2-β-Hydroxyethylamino-4-fluor-triazinyl-6, 2-Di-(β-hydroxyethylamino)-4-fluortriazinyl-6-, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanethyl-amino-4-fluor-triazinyl-6, 2-Benzolamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluortriazinyl-6,2-(2'-Chlor-4'-sulfophenyl)-amino-4-fluor-triazinyl-6,2-(2'-Chlor-5'-sulfophenyl)-amino-4-fluor-triazinyl-6,2-(2'-Methoxy-4'-sulfophenyl)-amino-4-fluortriazinyl-6,2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)-amino-4-fluor-triazinyl-6, 2-(6'-Sulfonaphthyl-(2')-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3'6'-Disulfonaphthyl-(1'))-4-fluor-triazinyl-6, 2-(3',6',8'-Trisulfonaphthyl-(2'))-4-fluor-triazinyl-6, Mono-, Di- oder Trihalogenpyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methyl-thio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Mono-chlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazin-6'-yl-1')-phenylsulfonyl- oder -carbonyl-, β-(4',5'-Dichlorpyridazon-6'-yl-1')-ethyl-carbonyl, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)carbamyl, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder-5-methylsulfonyl-4-pyrimidinyl-, 2-Fluor-5-carbonamido-4-pyrimidinyl-, 2-Fluor-5-carbomethoxy-4-pyrimidyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl, 2-Fluor-6-phenyl-4-pyrimidinyl-, 2-Fluor-6-cyan-4-pyrimidyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidyl-4, 6-Fluor-5-trifluormethyl-pyrimidinyl-4, 6-Fluor-2-methylpyrimidinyl-4, 6-Fluor-5-chlor-2-methylpyrimidinyl-4, 5,6-Difluor-pyrimidinyl-4, 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitropyrimidinyl-4, 6-Fluor-5-methyl-sulfonyl-pyrimidinyl-4, 6-Fluor-5-phenylsulfonylpyrimidinyl-4, sulfonylgruppenhaltige Triazinreste, wie 2,4-Bis-(phenylsulfonyl)triazinyl-6, 2-(3'-Carboxyphenyl)-sulfonyl-4-chlortriazinyl-6, 2-(3'-Sulfophenyl)-sulfonyl-4-chlortriazinyl-6, 2,4-Bis-(3'-carboxyphenylsulfonyl)-triazinyl-6; sulfonylgruppenhaltige Pyrimidinringen, wie 2-Carboxymethylsulfonyl-pyrimidinyl-4-, 2-Methylsulfonyl-6-methylpyrimidinyl-4, 2-Methylsulfonyl-6-ethyl- pyrimidinyl-4-, 2-Phenylsulfonyl-5-chlor-6-methyl-pyrimidinyl-, 2,6-Bis-methylsulfonyl-pyrimidinyl-4-, 2,6-Bis-methyl-sulfonyl-5-chlor-pyrimidinyl-4-, 2,4-Bis-methylsulfonyl-pyrimidin-5-sulfonyl-, 2-Methylsulfonylpyrimidinyl-4, 2-Phenyl-sulfonyl-pyrimidinyl-4-, 2-Trichlormethylsulfonyl-6-methyl-pyrimidinyl-4-, 2-methylsulfonyl-5-chlor-6-methylpyrimidinyl-4-, 2-Methylsulfonyl-5-brom-6-methyl-pyrimidinyl-4-, 2-Methyl-sulfonyl-5-chlor-6-ethyl-pyrimidinyl-4-, 2-Methyl-sulfonyl-5-chlor-6-chlormethyl-pyrimidinyl-4-, 2-Methyl-sulfonyl-4-chlor-6-methylpyrimidin-5-sulfonyl, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethylpyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carbonyl-pyrimidinyl-4-, 2-Methylsulfonyl-5-sulfopyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methyl-pyrimidinyl-4-, 2-Methyl-sulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl, 2,6-Bis(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-( 1, 1-Dimethylhydrazinium)-4-phenylamino- oder -4-(o-, m- oder p-sulfophenyl)-aminotriazinyl-6, 2-(2-Isopropyliden- 1,1-dimethyl)-hydrazinium-4-phenylamino- oder -4-(o-, m- oder p-sulfophenyl)-amino-triazinyl-6-, 2-N-Aminopyrrolidinium- oder 2-Amino-piperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder-4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-(2,2,2]-octan oder das 1,2-Bis-aza-bicyclo-[0,3,3]-octan quartär gebunden enthalten, 2-Pyridinium-4-phenylamino- oder 4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methyl-sulfonyl- oder 2-Ethoxysulfonylbenzthiazol-5- oder 6-sulfonyl- oder -carbonyl-, 2-Phenylsulfonyl-benzthiazol-5- oder -6-sulfonyl- oder carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxanol-5- oder -6-carbonyl- oder -sulfonyl-, 2-Chlor-benzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-triacyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino)-pyrimidinyl-4,2,5-Dichlor-6-methylsulfonyl-pyrimidinyl-4.

Desweiteren sind Reaktivgruppen der aliphatischen Reihe zu nennen, wie Acryloyl-, Mono-, Di- oder Trichloracryloyl-, wie -CO-CH=CH-Cl, -CO-CCl=CH₂, -CO-CCl-CH-CH₃, ferner -CO-CCl=CH-COOH, -CO-CH=CCl-COOH, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-,β-(2,2,3,3-Tetrafluorcyclobutyl-1)-aryloxy-, α- oder β-Bromacryloyl-, α- oder β-Alkyl- oder Arylsulfonylacryloyl-Gruppe, wie α- oder β-Methylsulfonylacryloyl, Chloracetyl.

Unter den Reaktivfarbstoffmischungen enthaltend die Reaktivfarbstoffe der Formeln (1) und (2) sind diejenigen bevorzugt, worin
a) n = 0 ist; oder
b) R₁ und R₂ Chloratome sind; oder
c) T ein Rest der Formel

   -CH₂-CH₂-OSO₃H (6a),

   -CH₂-CH₂-SO₃H (6b),

   -CH₂-CH₂-CH₂-OSO₃H (6c)

   oder

   -CH₂-CH₂-CH₂-CH₂-OSO₃H (6d)

   ist; oder
d) A Ethylen, 1,2-Propylen, 1,3-Propylen, 2-Hydroxy- 1,3-propylen, 2-Sulfato- 1,3-propylen, 1-Phenyl-1,3-propylen, 2-Phenyl-1,3-propylen, 2-(4'-Sulfophenyl)-1,3-propylen, 2-Methyl-1,3-propylen oder 1,4-Butylen ist; oder
e) Y ein Halogenpyrimidin- oder Halogentriazinrest ist; oder
f) n = 0 ist und R₁ und R₂ Chloratome sind; oder
g) n = 0 ist, R₁ und R₂ Chloratome sind und T die unter c) angegebene Bedeutung hat; oder
h) n, R₁, R₂ und T die unter g) angegebene Bedeutung haben und Y ein Halogenpyrimidin- oder Halogentriazinrest ist.

Besonders bevorzugt sind Reaktivfarbstoffmischungen enthaltend die Reaktivfarbstoffe der Formeln (1) und (2), gemäss d), worin A Ethylen, 1,2-Propylen, 1,3-Propylen oder 2-sulfato-1,3-propylen ist.

Ganz besonders bevorzugt sind Reaktivfarbstoffmischungen enthaltend die Reaktivfarbstoffe der Formeln (1) und (2), insbesondere die Reaktivfarbstoffe gemäss (a) bis (g), worin X₁, X₂ und X₃ je ein Rest der Formel 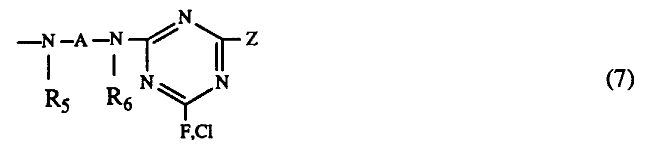 ist, worin R₅, R₆ und A die angegebenen Bedeutungen haben, und Z-NH₂ oder eine substituierte Aminogruppe ist.

Als substituierte Aminogruppen Z kommen in Betracht: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-aryl-aminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenethyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff und Schwefel enthalten können. Die oben genannten Alkyl-, Cycloalky-, Aralkyl- und Arylreste, die heterocyclischen Reste sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, C₁-C₄-Alkyl, C₁-C₄-Alkoxy, Acylaminogruppen, wie Acetylamino, Ureido, Hydroxy, Carboxy, Sulfomethyl, Sulfo und Sulfato.

Als Beispiele für den Aminorest Z in Formel (7) seien genannt: -NH₂, Methylamino, Ethylamino, Propylamino, Isopropylamino, Butylamino, Hexylamino, β-Methoxyethylamino, γ-Methoxypropylamino, β-Ethoxyethylamino, N,N-Dimethylamino, N,N-Diethylamino, β-Chlorethylamino, β-Cyanethylamino, γ-Cyanpropylamino, β-Carboxyethylamino, Sulfomethylamino, β-Sulfoethylamino, β-Hydroxyethylamino, N,N-Di-β-hydroxyethylamino, γ-Hydroxypropylamino, Benzylamino, Phenethylamino, Cyclohexylamino, N-Methyl-N-phenylamino, N-Ethyl-N-phenylamino, N-Propyl-N-phenylamino, N-Butyl-N-phenylamino, N-β-Cyanethyl-N-phenylamino, N-Ethyl-2-methylphenylamino, N-Ethyl-4-methylphenylamino, N-Ethyl-3-sulfophenylamino, N-Ethyl-4-sulfophenylamino, Phenylamino, Toluidino, Xylidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1-)-amino, 4,6,8-Trisulfonaphthyl-(1)-amino, 6-Sulfonaphthyl-(2)-amino, Pyridyl-(2)-amino, Morpholino, Piperidino und Piperazino.

Wichtig sind ferner Reaktivfarbstoffmischungen enthaltend die Reaktivfarbstoffe der Formeln (1) und (2) worin X₁, X₂ und X₃ je ein Rest der Formel 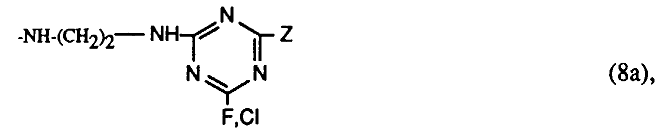 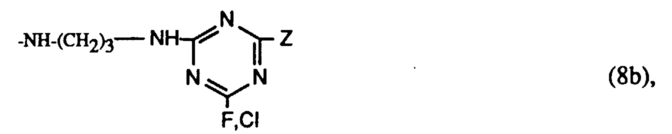 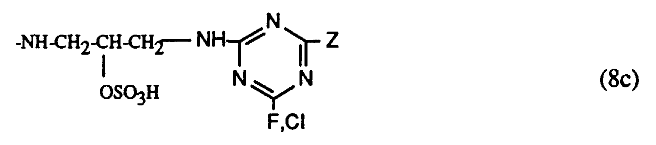 oder 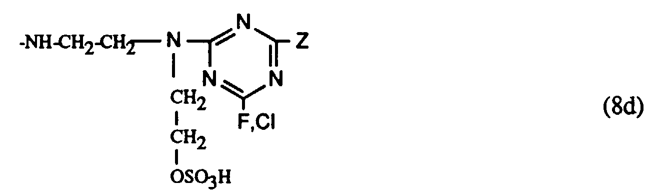 ist, worin Z-NH₂ oder eine substituierte Aminogruppe ist.

Insbesondere bedeutet Z in Formel (7), (8a), (8b), (8c) und (8d) -NH₂, C₁-C₄-Alkylamino, das durch Hydroxy oder Sulfo substituiert sein kann, N,N-Di-C₁-C₄-alkylmaino, das durch Hydroxy substituiert sein kann, Phenylamino, das durch C₁-C₄-Alkyl, C₁-C₄-Alkoxy, Halogen, Hydroxy, Ureido, Acetylamino, Carboxy, Sulfo oder Sulfomethyl substituiert sein kann, N-C₁-C₄-Alkyl-N-phenylamino, das im Alkylrest durch Halogen, Cyan, Hydroxy, Carboxy, Sulfo oder Sulfato und im Phenylrest durch C₁-C₄-Alkyl, C₁-C₄-Alkoxy, Halogen, Hydroxy, Ureido, Acetylamino, Carboxy, Sulfo oder Sulfomethyl substituiert sein kann, Sulfonaphthylamino oder Morpholino.

Vor allem bedeutet Z in den Formeln (7), (8a), (8b), (8c) und (8d) einen Rest der Formel 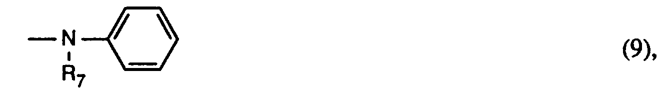 worin R₇ Wasserstoff oder C₁-C₄-Alkyl, das durch Halogen, Cyan, Hydroxy, Carboxy, Sulfo, oder Sulfato substituiert sein kann, ist, und der Phenylring durch Methyl, Methoxy, Ethoxy, Chlor, Hydroxy, Ureido, Acetylamino, Carboxy oder Sulfo substituiert sein kann.

Besonders wichtig sind die Reaktivfarbstoffmischungen enthaltend die Reaktivfarbstoffe der Formeln 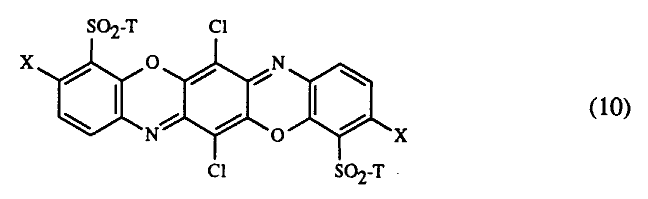 und 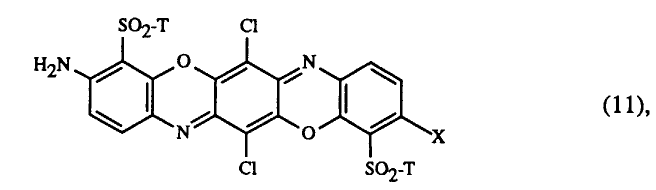 worin T einer der Reste der Formeln (6a), (6b) (6c) oder (6d) und X einer der Reste der Formeln (7), (8a), (8b), (8c) oder (8d) ist, vorzugsweise worin X einer der Reste der Formeln (7), (8a), (8b), (8c) oder (8d) ist, und das Halogen am Triazinring ein Fluoratom ist.

Ganz besonders wichtig sind die Reaktivfarbstoffmischungen enthaltend die Reaktivfarbstoffe der Formeln 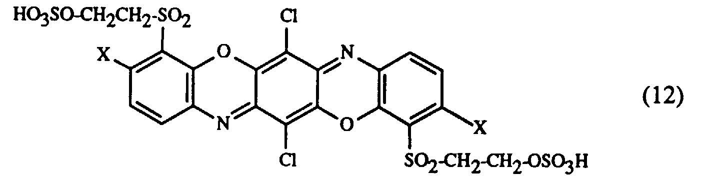 und 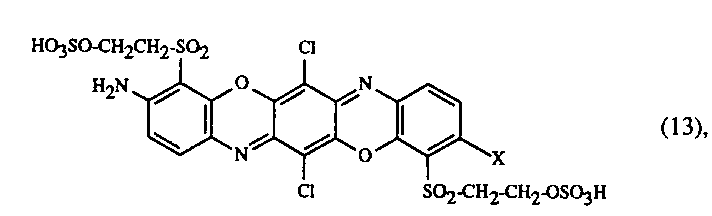 worin X ein Rest der Formel 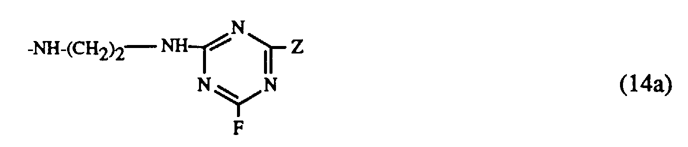 oder 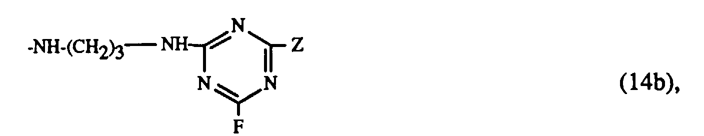 und Z β-Sulfatoethylamino, m-Sulfophenylamino, p-Sulfophenylamino, 2,4-Disulfophenylamino oder 2,5-Disulfophenylamino ist.

Gegenstand der Erfindung ist ferner ein Verfahren zur Herstellung der Reaktivfarbstoffmischungen enthaltend die Reaktivfarbstoffe der Formeln (1) und (2), welches dadurch gekennzeichnet ist, dass man Verbindungen der Formel 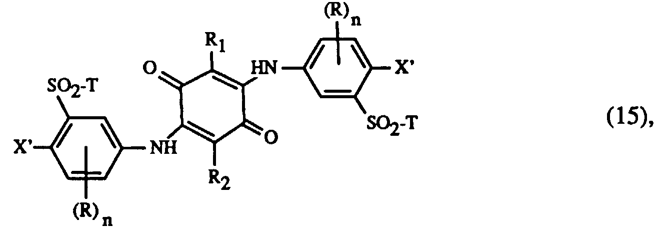 worin R₁, R₂, R, n und T die unter den Formeln (1) und (2) angegebenen Bedeutungen haben, und X' ein Rest der Formel 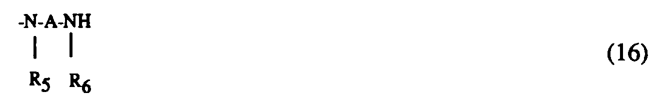 ist, worin A, R₅ und R₆ die unter den Formeln (1) und (2) angegebenen Bedeutungen haben, in Oleum bei höherer Temperatur einer Ringschlussreaktion unterwirft, und die so erhaltene Mischung enthaltend die Verbindungen der Formeln 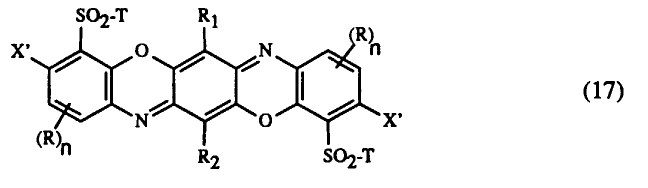 und 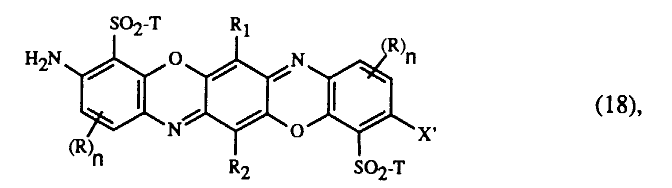 worin R₁, R₂, R, n, T und X' die angegebenen Bedeutungen haben, mit faserreaktiven Verbindungen, welche einen Rest Y enthalten, insbesondere solche der Formel

Halogen-Y (19)

umsetzt, so dass eine Mischung von Reaktivfarbstoffen der Formeln (1) und (2) entsteht, gegebenenfalls mit kleineren Anteilen der Verbindung (3).

Gegenstand der vorliegenden Erfindung ist ferner ein Verfahren zur Herstellung der erfindungsgemässen Reaktivfarbstoffmischungen, welches dadurch gekennzeichnet ist, dass man die Reaktivfarbstoffe der Formeln (1) und (2) in beliebigem Verhältnis miteinander mischt. Es kommen Mischungsverhältnisse in Frage, in denen das Gewichtsverhältnis der Farbstoffe der Formeln (1) und (2) von 10:90 bis 90: 10, vorzugsweise von 30:70 bis 70:30, beträgt. Die Reaktivfarbstoffe der Formeln (1) und (2) können nach an sich bekannten Methoden hergestellt werden.

Falls der Reaktivrest Y ein Halogentriazinrest ist, kann durch vorhergehende oder nachträgliche Kondensation mit einer Amino-, Hydroxy- oder Mercaptoverbindung ein Halogenatom am Triazinring gegen einen Amino-, Alkoxy-, Aryloxy-, Alkylthio oder Arylthiorest ausgetauscht werden. Als Beispiele für derartige Amino-, Hydroxy- und Mercaptoverbindungen seien die folgenden genannt:

Ammoniak, Methylamin, Dimethylamin, Ethylamin, Diethylamin, Propylamin, Isopropylamin, butylamin, Dibutylamin, Isobutylamin, sek.-Butylamin, tert.-Butylamin, Hexylamin, Methoxyethylamin, Ethoxyethylamin, Methoxypropylamin, chlorethylamin, Hydroxyethylamin, Dihydroxyethylamin, Hydroxypropylamin, Aminoethansulfonsäure, β-Sulfatoethylamin, Benzylamin, Phenethylamin, Cyclohexylamin, N-Methylaminobenzol, N-Ethylaminobenzol, N-Propylaminobenzol, N-Isopropylaminobenzol, N-Butylaminobenzol, N-Isobutylaminobenzol, N-sek.-Butylaminobenzol, N-Hexylaminobenzol, N-β-Hydroxyethylaminobenzol, N-β-Chlorethylaminobenzol, N-β-Cyanethylaminobenzol, N-β-Sulfoethylaminobenzol, 1-(N-Ethylamino)-2-, -3- oder -4-methylbenzol, 1-(N-Ethylamino)-2-, -3- oder -4-ethylbenzol, 1-(N-Ethylamino)-2-, -3- oder -4-chlorbenzol, 1-N-Ethylaminobenzol-3- oder -4-sulfonsäure, 1-(N-Ethylamino)-4-butylbenzol, 1-(N-Ethylamino)-4-hexylbenzol, 1-(N-Ethylamino)-4-octylbenzol, 1-(N-Ethylamino)-4-vinylbenzol, 1-N-n-Butylamino-3-methylbenzol, 1-(N-Ethylamino)-4-fluorbenzol, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Ethylanilin, 3- oder 4-Acetylaminoanilin, 2,5-Dimethoxyanilin, o-, m- und p-Anisidin, o-, m- und p-Phenetidin, 2-Methoxy-5-methylanilin, 2-Ethoxy-5-methoxyanilin, 4-Bromanilin, 3-Aminobenzamid, 4-Aminophenylsulfamid, 3-Trifluormethylanilin, 3- und 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methan-sulfonsäure, 2-Aminotoluol-4-sulfonsäure, 2-Aminotoluol-5-sulfonsäure, p-Aminosalicyclsäure, 1-Amino-4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamino-1-, -3-, -6-, -5-, -6, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin- 1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin- -1,5,7-, - 1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin, Wasser, Methanol, Ethanol, Propanol, Isopropanol, n-Butanol, Isobutanol, sek.-Butanol, tert.-Butanol, Hexanol, Cyclohexanol, β-Methoxyethanol, β-Ethoxyethanol, γ-Methoxypropanol, γ-Ethoxypropanol, β-Ethoxy-β-ethoxyethanol, Glycolsäure, Phenol, o-, m- und p-Chlorphenol, Methanthiol, Ethanthiol, Propanthiol, Isopropanthiol, n-Butanthiol, Thioglycolsäure, Thioharnstoff, Thiophenol, α-Thionaphthol, β-Thionaphthol.

Bei der Herstellung derartiger Triazinfarbstoffe können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Verfahrensvarianten sind dadurch gekennzeichnet, dass man:
1. Dioxazinverbindungen der Formeln (17)und (18), worin X' ein Rest der Formel (16) ist, mit einem 2,4,6-Trihalogen-s-triazin kondensiert und das erhaltene Kondensationsprodukt mit 1 Mol eines Amins kondensiert.
2. 2,4,6-Trihalogen-s-triazin mit einem Amin monokondensiert, und die erhaltene Zwischenverbindung im molaren Verhältnis 1:1 mit Dioxazinverbindungen der Formeln (17) und (18), worin X' ein Rest der Formel (16) ist, kondensiert.

Die Kondensation der Halogentriazine mit den genannten Amino-, Hydroxy- oder Mercaptoverbindungen erfolgt in an sich bekannter Weise, vorzugsweise in Gegenwart von alkalisch wirkenden Mitteln.

Die Umsetzung der an sich bekannten Chloranilverbindung der Formel (15), worin X' ein Rest der Formel (16) ist, zu der Mischung der Verbindungen der Formeln (17) und (18) erfolgt insbesondere in Oleum bei vorzugsweise 25 bis 100°C, wobei die Umsetzung insbesondere bei 30 bis 50°C begonnen wird und anschliessend die Temperatur auf 75 bis 100°C erhöht wird. Infolge der höheren Temperatur bei der Ringschlussreaktion findet eine teilweise Abspaltung einer der beiden H₂N-A- Gruppen statt.

Die bevorzugte Herstellungsweise der Reaktivfarbstoffmischung enthaltend die Reaktivfarbstoffe der Formeln (12) und (13), worin X ein Rest der Formel (14a) oder (14b) ist, ist dadurch gekennzeichnet, dass man von einer Verbindung der Formel 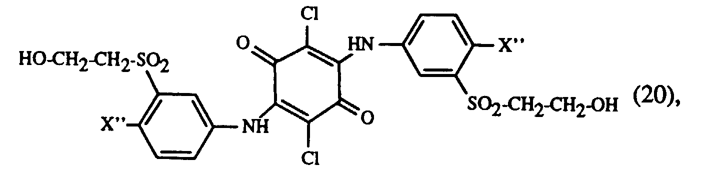 worin X" ein Rest der Formel

-NH-(CH₂)₂-NH₂ (21a)

oder

-NH-(CH₂)₃-NH₂ (21b)

ist, ausgeht, und die durch Ringschluss erhaltene Mischung enthaltend die Verbindungen der Formeln 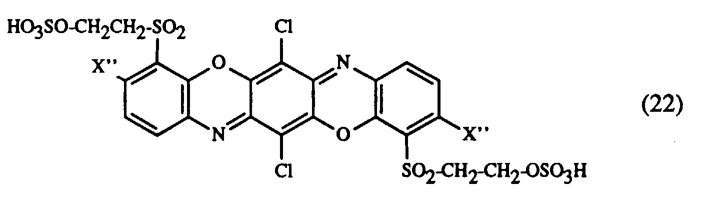 und 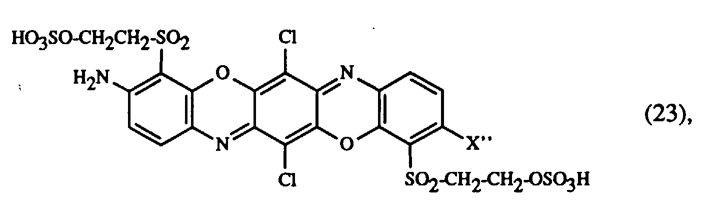 worin X" die angegebene Bedeutung hat, mit einer Verbindung der Formel 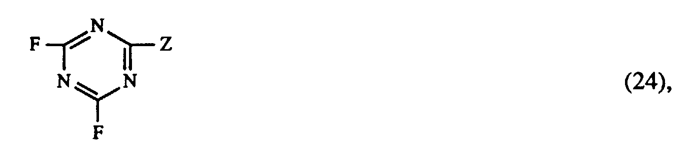 worin Z β-Sulfatoethylamino, m-Sulfophenylamino, p-Sulfophenylamino, 2,4-Disulfophenylamino oder 2,5-Disulfophenylamino ist, kondensiert.

Die Kondensation des 2,4,6-Trifluor-s-triazins mit den Dioxazinverbindungen der Formeln (17) und (18) erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit Aminen setzt man die freien Amine oder deren Salze, bevorzugt in Form des Hydrochlorids, ein. Die Umsetzung wird bei Temperaturen etwa zwischen 0 und 40°C, bevorzugt zwischen 5 und 25°C, unter Zusatz säurebindender Mittel, bevorzugt Natriumcarbonat, in einem pH-Bereich von 2 bis 8, bevorzugt 5 bis 6,5, durchgeführt.

Die Kondensation des Fluortriazins mit einem Amin kann vor oder nach der Kondensation des Fluortriazins mit der Mischung der Dioxazine der Formeln (17) und (18) geschehen. Die Kondensation des Fluortriazins mit einem Amin erfolgt vorzugsweise in wässriger Lösung oder Suspension, bei niedriger Temperatur und bei schwach saurem bis neutralem pH-Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Die als Ausgangsstoffe verwendeten Dioxazinverbindungen der Formeln (17) und (18), worin X' die angegebene Bedeutung hat, werden in üblicher Weise durch Ringschluss aus dem Anil der Formel (15) hergestellt.

Die Reaktivfarbstoffmischungen enthaltend die Reaktivfarbstoffe der Formeln (1) und (2) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Der Reaktivrest Y enthält einen Substituenten, der eine faserreaktive Abgangsgruppe ist, bzw. enthält, oder die nach Art von faserreaktiven Abgangsgruppen wirksam werden können. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und evtl. Carboxygruppen von synthetischen Polyamiden unter Bildung kovalenter chemischer Bindung zu reagieren vermögen.

Die erfindungsgemässen Reaktivfarbstoffmischungen eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die erfindungsgemässen Reaktivfarbstoffmischungen sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffmischungen lassen sich auf verschiedene Weise auf das Fasermaterial applizieren und auf der Faser fixieren, insbesondere in Form von wässrigen Farbstofflösungen und -druckpasten.

Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Reaktivfarbstoffmischungen zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffmischungen eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffmischungen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter. Die Herstellung der Zwischenverbindung ist in den nachfolgenden Ausführungsbeispielen nicht in allen Fällen beschrieben, sie ergibt sich jedoch ohne weiteres aus der allgemeinen Beschreibung.

### Beispiel 1: 35,6 Teile des Chloranilkondensationsproduktes der Formel

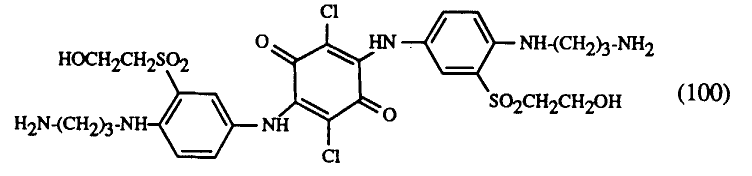

werden innerhalb von ca. 40 Minuten in 1600 Teile Oleum (24%-ig) eingetragen. Die Temperatur steigt auf ca. 40° und es entsteht eine olivbraune Lösung. Man erwärmt die Reaktionsmischung innert 15 Minuten auf 80° und hält diese Temperatur ca. 6 Minuten. Es entsteht eine tiefblaue Lösung. Anschliessend kühlt man auf Raumtemperatur ab und trägt die Oleumlösung auf 4000 Teile Eis aus. Unter Eiskühlung werden dann innerhalb von 60 Minuten 2500 Teile einer 10 n Natriumhydroxidlösung zugetropft. Es entsteht eine klare Lösung, aus welcher das erhaltene Produkt mit 300 Teilen NaCl isoliert wird. Infolge der bei höherer Reaktionstemperatur stattfindenden partiellen Abspaltung einer der beiden H₂N-(CH₂)₃-Gruppen im Ausgangsprodukt der Verbindung der Formel (100) liegt nach der Ringschlussreaktion somit eine Mischung der Verbindungen der Formeln 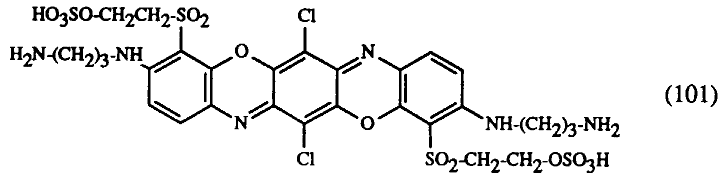 und 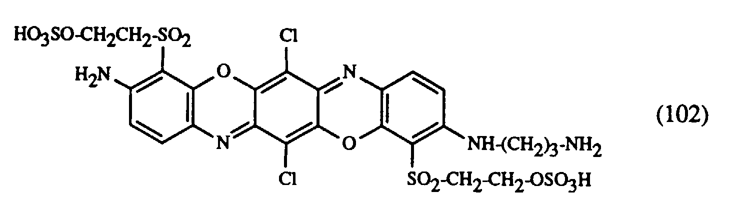 vor.

18 Teile der so erhaltenen Farbstoffmischung werden in 200 Teilen Wasser angerührt und mit Natronlauge auf pH 8 gestellt. Die erhaltene Suspension wird hierauf mit 200 Teilen einer neutralen wässerigen Lösung versetzt, die 18 Teile des primären Kondensationsproduktes aus Cyanurfluorid und Anilin-2,5-disulfonsäure enthält. Man kondensiert bei Raumtemperatur und hält das pH mit 1-n Natronlauge bei ca. 8. Nach vollständiger Acylierung der aliphatischen Aminogruppe wird der Farbstoff mit Kochsalz isoliert, abfiltriert, und im Vakuum getrocknet.

Das so erhaltene Farbstoffgemisch enthält die Farbstoffe der Formeln 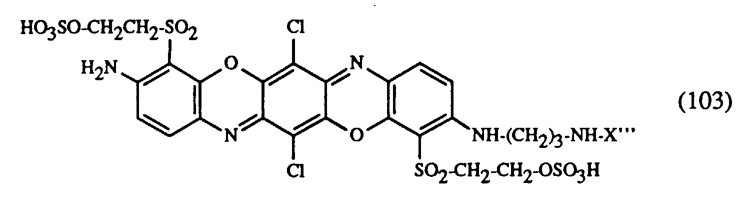 und 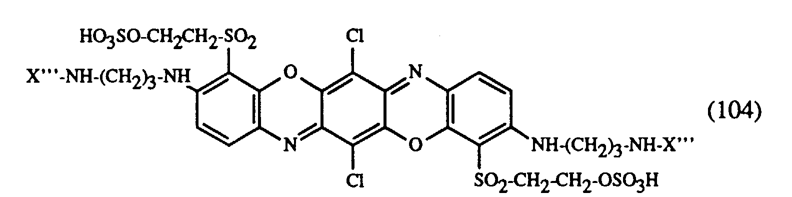 wobei X"' den Rest der Formel 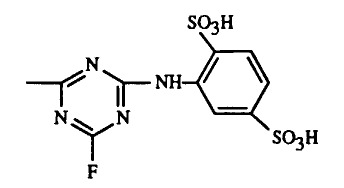 bedeutet.

Das erhaltene Farbstoffgemisch färbt Baumwolle in reinen blauen Tönen.

Verwendet man anstelle von Anilin-2,5-disulfonsäure eine äquivalente Menge 2-Methylanilin-5-sulfonsäure, so erhält man eine Farbstoffmischung mit ähnlichen Eigenschaften.

Weitere Farbstoffmischungen werden erhalten, wenn in dem obigen Beispiel in der Verbindung der Formel (100) solche Verbindungen verwendet werden, die zu Farbstoffmischungen der Formeln (101) und (102) führen, worin anstelle des Restes -SO₂CH₂CH₂OSO₃H ein Rest -SO₂CH₂CH₂SO₃H, -SO₂CH₂CH₂CH₂OSO₃H oder -SO₂CH₂CH₂CH₂CH₂OSO₃H vorhanden ist, oder wenn zur Acylierung der aliphatischen Aminogruppen eine entsprechende Menge des primären Kondensationsproduktes aus Cyanurfluorid und einem der unten aufgeführten Amine verwendet wird.

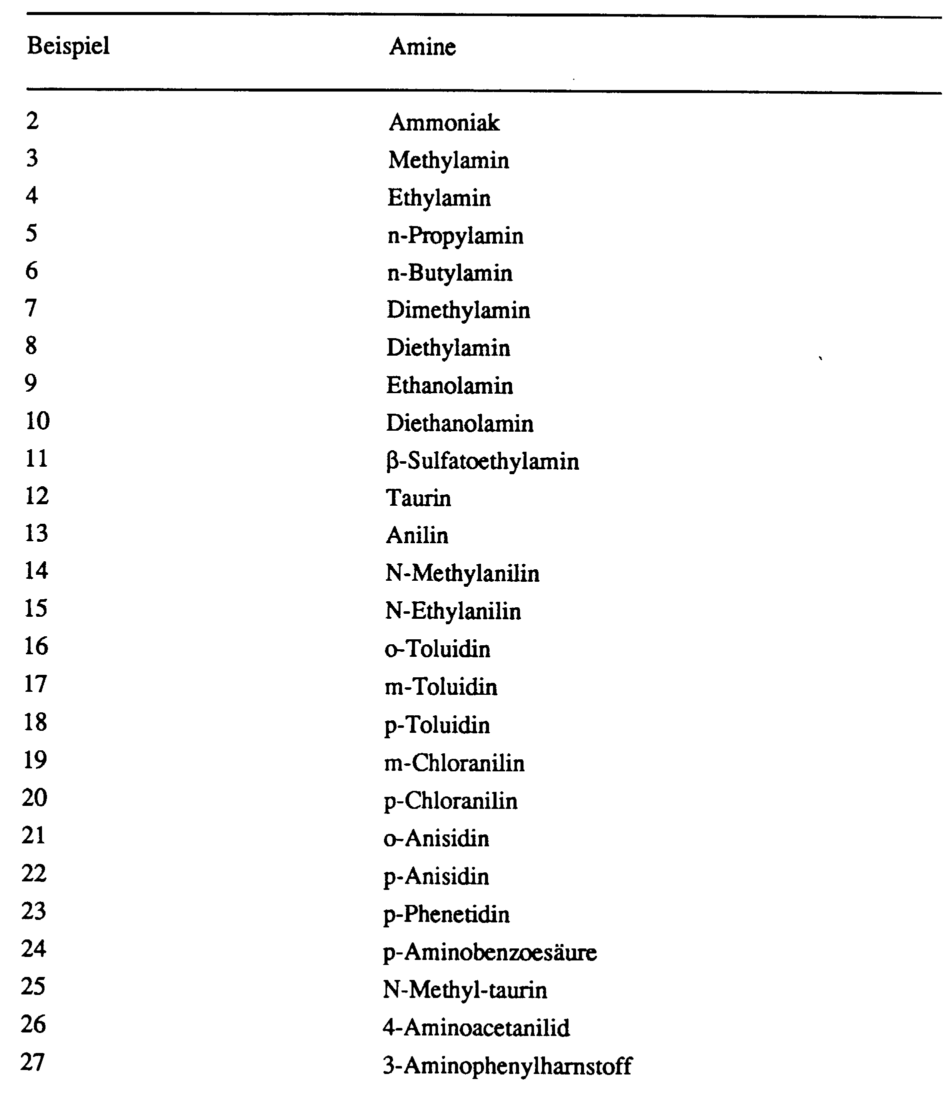

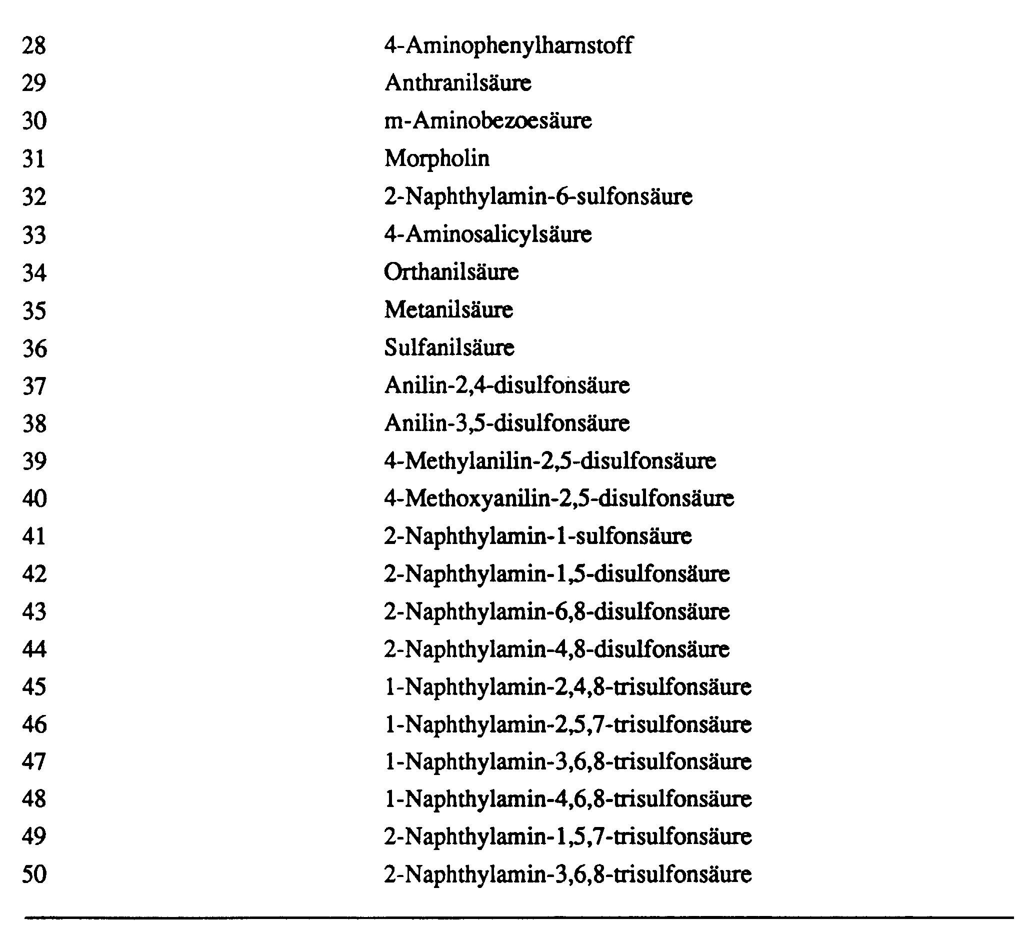

Wenn man in den Beispielen 1 bis 50 Cyanurfluorid durch eine äquimolare Menge Cyanurchlorid ersetzt, erhält man ebenfalls Farbstoffmischungen, die Cellulosefasern in blauen Tönen färben.

Verwendet man anstatt der in Beispiel 1 beschriebenen Mischung der Farbstoffe der Formeln (101) und (102), welche 1,3-Diaminopropan-Brückenglieder aufweisen, analog hergestellte Mischungen von Verbindungen der Formeln 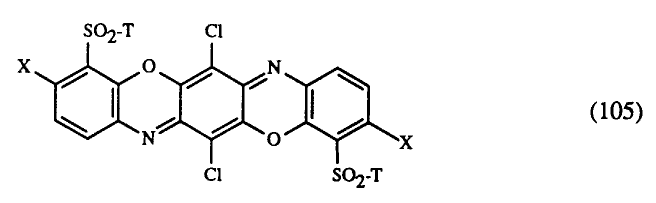 und 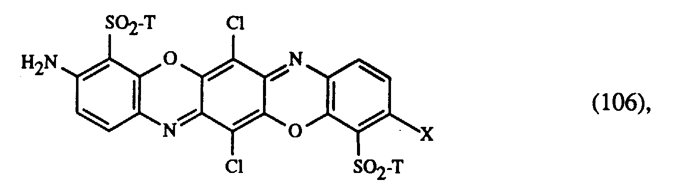 worin X ein Rest

-NH-(CH₂)₂-NH₂,

-NH-CH₂-CH(CH₃)-NH₂,

-NH-(CH₂)₂-NHCH₃,

-NH-(CH₂)₂-NHC₂H₅,

-NH-(CH₂)₃-NHCH₃,

-NH-(CH₂)₃-NHC₂H₅,

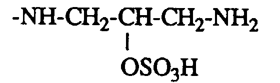

oder

-NH-(CH₂)₂-NH-(CH₂)₂-OSO₃H,

und T jeweils einer der Reste

-CH₂-CH₂-OSO₃H,

-CH₂-CH₂-SO₃H,

-CH₂-CH₂-CH₂-OSO₃H,

und

-CH₂-CH₂-CH₂-CH₂-OSO₃H

ist, und setzt diese mit den primären Kondensationsprodukten aus Cyanurfluorid oder Cyanurchlorid und den in den Beispielen 1 bis 50 genannten Aminen um, so erhält man weitere Farbstoffmischungen, welche Cellulosefasern in blauen Tönen mit guten Echtheitseigenschaften färben.

Wenn man das als Ausgangsverbindung verwendete Anil der Formel (100) strukturell abwandelt und im übrigen nach den Angaben von Beispiel 1 verfährt, erhält man z.B. eine Mischung con 2,9-Dichlortriphendioxazinen, welche in 4- und 11-Stellung anstatt des Restes -SO₂CH₂CH₂OSO₃H einen Rest -SO₂CH₂CH₂SO₃H aufweisen: 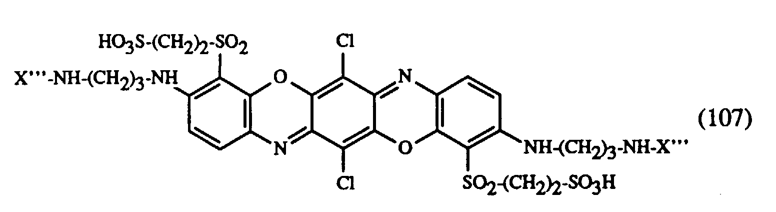 und 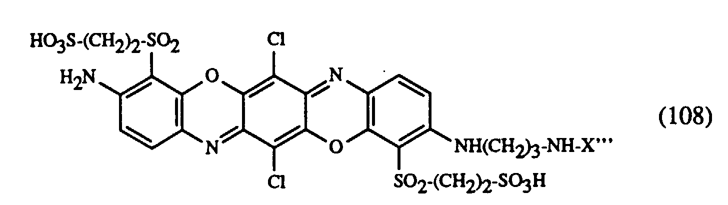 wobei X"' der Rest der Formel 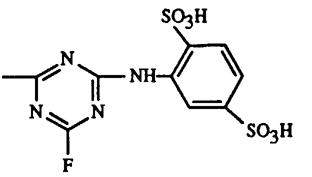 ist, so erhält man ebenfalls wertvolle Farbstoffmischungen, welche Cellulosefasern in blauen Tönen färben.

### Färbevorschrift 1

2 Teile der gemäss Beispiel 1 erhaltenen Farbstoffmischung werden unter Zusatz von 5 bis 20 Teilen Harnstoff und 2 Teilen wasserfreiem Na₂CO₃ in 100 Teilen Wasser bei 20 bis 50°C gelöst. Mit der erhaltenen Lösung wird ein Baumwollgewebe imprägniert, man quetscht auf 60 bis 80 % Gewichtszunahme ab, und trocknet dann. Danach wird während 1/2 bis 5 Minuten bei 140 bis 210°C thermofixiert, dann während einer Viertelstunde in einer 0,1 0,1%igen kochenden Lösung eines ionenfreien Waschmittels geseift, gespült und getrocknet.

### Färbevorschrift 2

2 Teile der gemäss Beispiel 1 erhaltenen Farbstoffmischung werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, und auf 75 % Gewichtszunahme abgequetscht, und dann getrocknet.

Danach imprägniert man das Gewebe mit einer 20°C warmen Lösung, die pro Liter 5 Gramm Natriumhydroxid und 300 Gramm Natriumchlorid enthält, quetscht auf 75 % Gewichtszunahme ab, dämpft die Färbung während 30 Sekunden bei 100 bis 101°, seift während einer Viertelstunde in einer 0,3%igen kochenden Lösung eines ionenfreien Waschmittels, spült und trocknet.

### Färbevorschrift 3

2 Teile der gemäss Beispiel 1 erhältlichen Farbstoffmischung werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 60°C, wobei nach 30 Minuten 40 Teile wasserfreies Na₂CO₃ und nochmals 60 Teile Natriumchlorid zugegeben werden. Man hält die Temperatur 30 Minuten auf 60°C, spült und seift dann die Färbung während 15 Minuten in einer 0,3%igen kochenden Lösung eines ionenfreien Waschmittels, spült und trocknet.

### Färbevorschrift 4

4 Teile der in Beispiel 1 hergestellten Reaktivfarbstoffmischung werden in 50 Teilen Wasser gelöst. Dazu gibt man 50 Teile einer Lösung, die pro Liter 5 g Natriumhydroxid und 10 g wasserfreies Na₂CO₃ enthält. Mit der erhaltenen Lösung wird ein Baumwollgewebe foulardiert, quetscht auf 70 % Gewichtszunahme ab, und wickelt das Baumwollgewebe dann auf eine Kaule. Das Baumwollgewebe wird so während 3 bis 12 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

## Patentansprüche

1. Reaktivfarbstoffmischungen, enthaltend die Reaktivfarbstoffe der Formeln 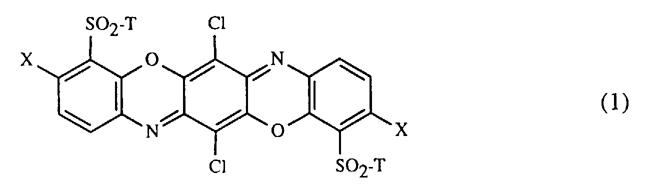 und 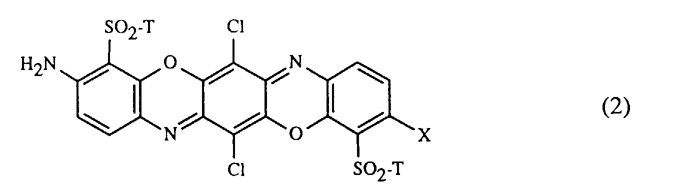 im Gewichtsverhältnis von 10:90 bis 90:10,
worin T ein Rest der Formel
-CH₂-CH₂-OSO₃H (6a),
-CH₂-CH₂-SO₃H (6b),
-CH₂-CH₂-CH₂-OSO₃H (6c)
oder
-CH₂-CH₂-CH₂-CH₂-OSO₃H (6d);
X ein Rest der Formel 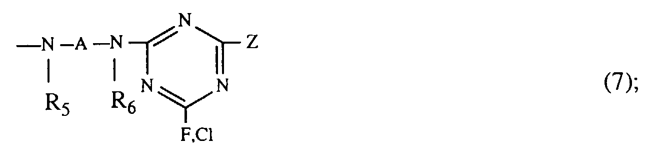
Z -NH₂ oder eine substituierte Aminogruppe;
R₅ und R₆ unabhängig voneinander Wasserstoff oder unsubstituiertes oder durch Halogen, Hydroxy, Cyan, Sulfo oder Sulfato substituiertes C₁-C₄-Alkyl; und
A Ethylen, 1,2-Propylen, 1,3-Propylen, 2-Hydroxyl-1,3-propylen, 2-Sulfato-1,3-propylen, 1-Phenyl-1,3-propylen, 2-Phenyl-1,3-propylen, 2-(4'-Sulfophenyl)-1,3-propylen, 2-Methyl-1,3-propylen oder 1,4-Butylen sind.

2. Reaktivfarbstoffmischungen gemäss Anspruch 1, worin A Ethylen, 1,2-Propylen, 1,3-Propylen oder 2-Sulfato-1,3-propylen ist.

3. Reaktivfarbstoffmischungen gemäss Anspruch 1 oder 2, worin X ein Rest der Formel 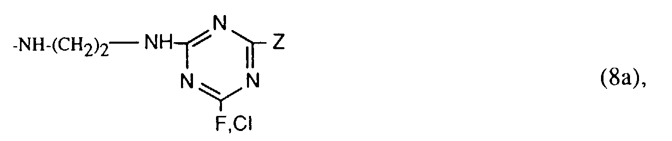 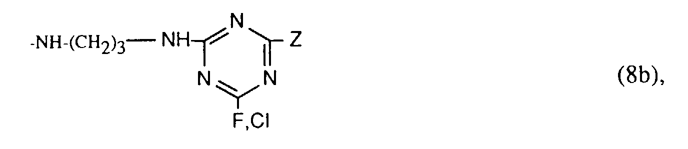 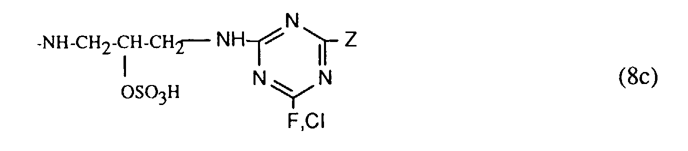 oder 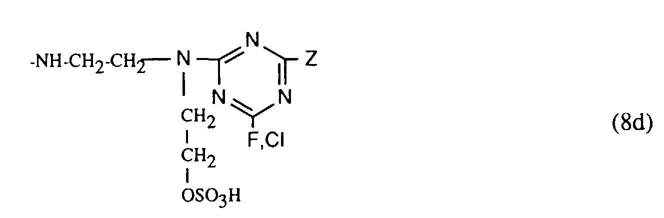 ist, worin Z -NH₂ oder eine substituierte Aminogruppe ist.

4. Reaktivfarbstoffmischungen gemäss einem der Ansprüche 1 bis 3, worin Z -NH₂, C₁-C₄-Alkylamino, das durch Hydroxy oder Sulfo substituiert sein kann, N,N-Di-C₁-C₄-alkylmaino, das durch Hydroxy substituiert sein kann, Phenylamino, das durch C₁-C₄-Alkyl, C₁-C₄-Alkoxy, Halogen, Hydroxy, Ureido, Acetylamino, Carboxy, Sulfo oder Sulfomethyl substituiert sein kann, N-C₁-C₄-Alkyl-N-phenylamino, das im Alkylrest durch Halogen, Cyan, Hydroxy, Carboxy, Sulfo oder Sulfato und im Phenylrest durch C₁-C₄-Alkyl, C₁-C₄-Alkoxy, Halogen, Hydroxy, Ureido, Acetylamino, Carboxy, Sulfo oder Sulfomethyl substituiert sein kann, Sulfonaphthylamino oder Morpholino ist.

5. Reaktivfarbstoffmischungen gemäss Anspruch 4, worin Z ein Rest der Formel 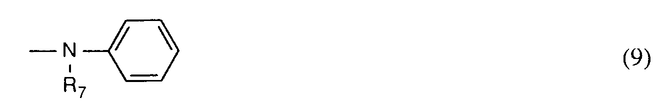 ist, worin R₇ Wasserstoff oder C₁-C₄-Alkyl, das durch Halogen, Cyan, Hydroxy, Carboxy, Sulfo, oder Sulfato substituiert sein kann, ist, und der Phenylring durch Methyl, Methoxy, Ethoxy, Chlor, Hydroxy, Ureido, Acetylamino, Carboxy oder Sulfo substituiert sein kann.

6. Reaktivfarbstoffmischungen gemäss einem der Ansprüche 1 bis 5, worin das Halogen am Triazinring im Rest der Formeln (7), (8a), (8b), (8c) oder (8d) ein Fluoratom ist.

7. Reaktivfarbstoffmischungen gemäss Anspruch 6, enthaltend die Reaktivfarbstoffe der Formeln 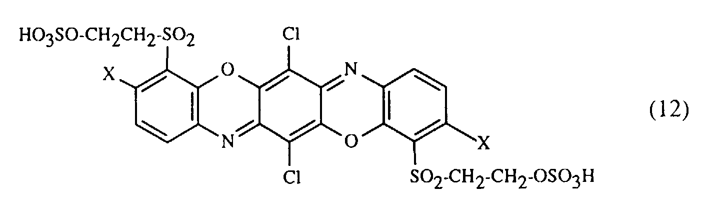 und 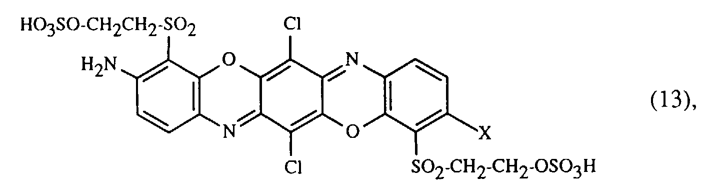 worin X ein Rest der Formel 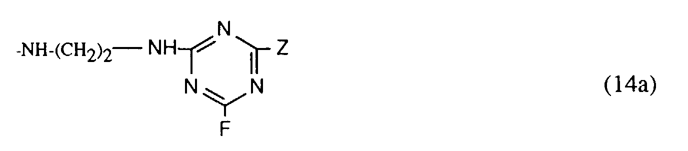 oder 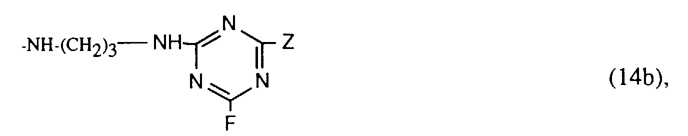 und Z β-Sulfatoethylamino, m-Sulfophenylamino, p-Sulfophenylamino, 2,4-Disulfophenylamino oder 2,5-Disulfophenylamino ist.

8. Verfahren zur Herstellung von Reaktivfarbstoffmischungen gemäss Anspruch 1, dadurch gekennzeichnet, dass man eine Verbindung der Formel 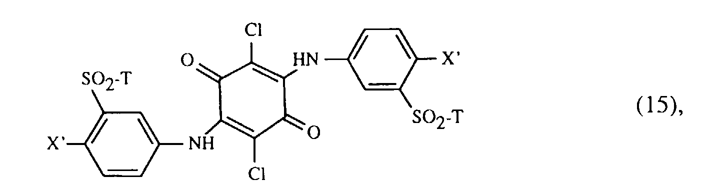 worin T die in Anspruch 1 angegebenen Bedeutung hat und X' ein Rest der Formel 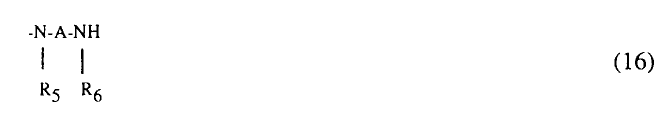 ist, worin A, R₅ und R₆ die in Anspruch 1 angegebenen Bedeutungen haben, in Oleum bei höherer Temperatur einer Ringschlussreaktion unterwirft, und die so erhaltene Mischung enthaltend die Verbindungen der Formeln 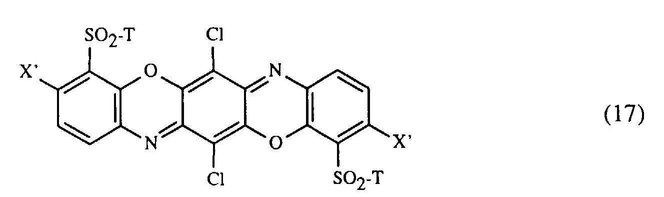 und 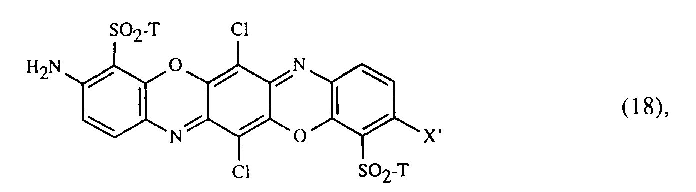 worin T und X' die angegebenen Bedeutungen haben, mit einer Verbindung der Formel 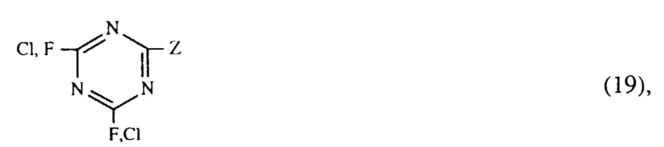 worin Z die im Anspruch 1 angegebene Bedeutung hat, umsetzt, so dass eine Mischung von Reaktivfarbstoffen gemäss Anspruch 1 entsteht.

9. Verfahren gemäss Anspruch 8, dadurch gekennzeichnet, dass man von einer Verbindung der Formel 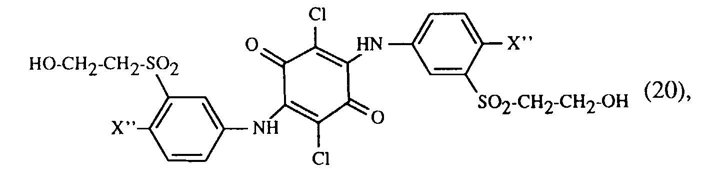 worin X" ein Rest der Formel
-NH-(CH₂)₂-NH₂ (21a)
oder
-NH-(CH₂)₃-NH₂ (21b)
ist, ausgeht, und die durch Ringschluss erhaltene Mischung enthaltend die Verbindungen der Formeln 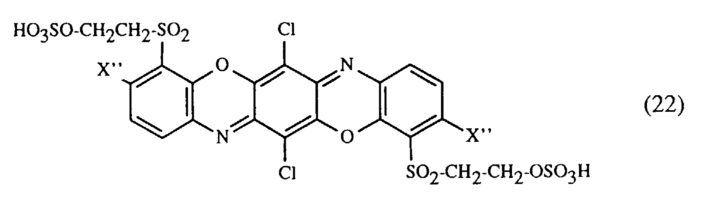 und 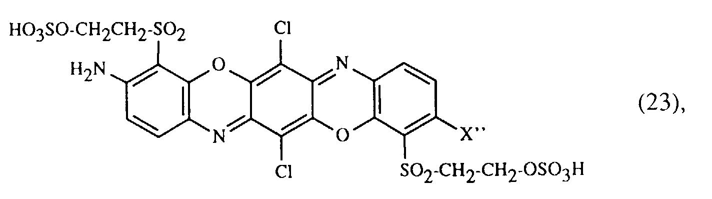 worin X" die angegebene Bedeutung hat, mit einer Verbindung der Formel 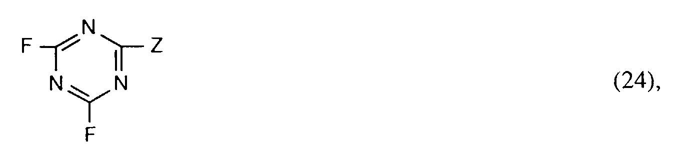 worin Z β-Sulfatoethylamino, m-Sulfophenylamino, p-Sulfophenylamino, 2,4-Disulfophenylamino oder 2,5-Disulfophenylamino ist, kondensiert.

10. Verwendung der Reaktivfarbstoffmischungen gemäss den Ansprüchen 1 bis 7, bzw. der gemäss den Ansprüchen 8 und 9 erhältlichen Reaktivfarbstoffmischungen zum Färben und Bedrucken.

11. Verwendung gemäss Anspruch 10 zum Färben von Cellulosefasern.

## Claims

1. A reactive dye mixture comprising the reactive dyes of the formulae 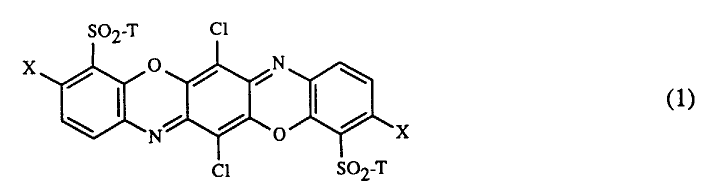 and 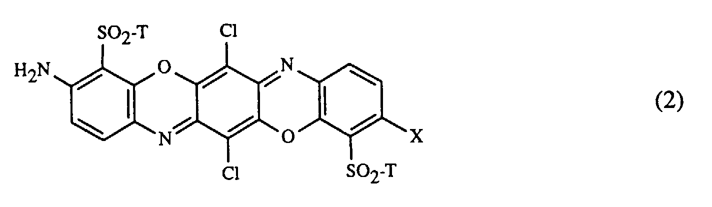 in a weight ratio of from 10:90 to 90:10,
in which T is a radical of the formula
-CH₂-CH₂-OSO₃H (6a),
-CH₂-CH₂-SO₃H (6b),
-CH₂-CH₂-CH₂-OSO₃H (6c)
or
-CH₂-CH₂-CH₂-CH₂-OSO₃H (6d)
is a radical of the formula 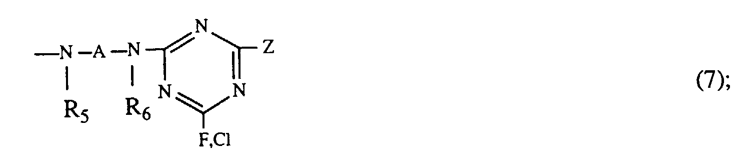
Z is -NH₂ or a substituted amino group;
R₅ and R₆ independently of one another are hydrogen or C₁-C₄alkyl which is unsubstituted or substituted by halogen, hydroxyl, cyano, sulfo or sulfato; and
A is ethylene, 1,2-propylene, 1,3-propylene, 2-hydroxy-1,3-propylene, 2-sulfato- 1,3-propylene, 1-phenyl-1,3-propylene, 2-phenyl-1,3-propylene, 2-(4'-sulfophenyl)-1,3-propylene, 2-methyl-1,3-propylene or 1,4-butylene.

2. A reactive dye mixture according to claim 1, in which A is ethylene, 1,2-propylene, 1,3-propylene or 2-sulfato-1,3-propylene.

3. A reactive dye mixture according to claim 1 or 2, in which X is a radical of the formula 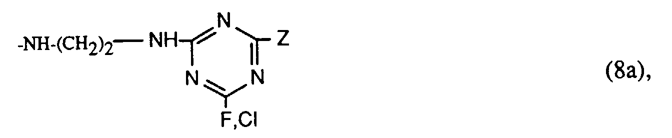 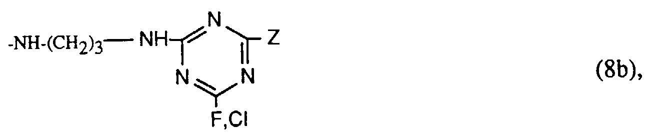 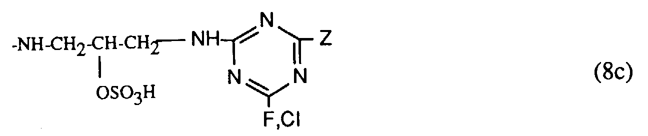 or 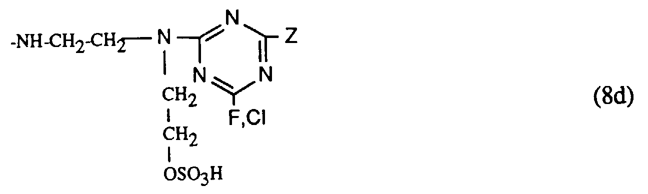 in which Z is -NH₂ or a substituted amino group.

4. A reactive dye mixture according to any one of claims 1 to 3, in which Z is -NH₂, C₁-C₄alkylamino, which can be substituted by hydroxyl or sulfo, N,N-di-C₁-C₄alkylamino, which can be substituted by hydroxyl, phenylamino, which can be substituted by C₁-C₄alkyl, C₁-C₄alkoxy, halogen, hydroxyl, ureido, acetylamino, carboxyl, sulfo or sulfomethyl, N-C₁-C₄alkyl-N-phenylamino, which can be substituted in the alkyl radical by halogen, cyano, hydroxyl, carboxyl, sulfo or sulfato and in the phenyl radical by C₁-C₄alkyl, C₁-C₄alkoxy, halogen, hydroxyl, ureido, acetylamino, carboxyl, sulfo or sulfomethyl, sulfonaphthylamino or morpholino.

5. A reactive dye mixture according to claim 4, in which Z is a radical of the formula 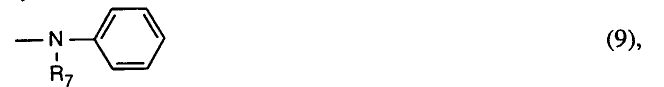 in which R₇ is hydrogen or C₁-C₄alkyl, which can be substituted by halogen, cyano, hydroxyl, carboxyl, sulfo or sulfato, and the phenyl ring can be substituted by methyl, methoxy, ethoxy, chlorine, hydroxyl, ureido, acetylamino, carboxyl or sulfo.

6. A reactive dye mixture according to any one of claims 1 to 5, in which the halogen on the triazine ring in the radical of the formulae (7), (8a), (8b), (8c) or (8d) is a fluorine atom.

7. A reactive dye mixture according to claim 6, comprising the reactive dyes of the formulae 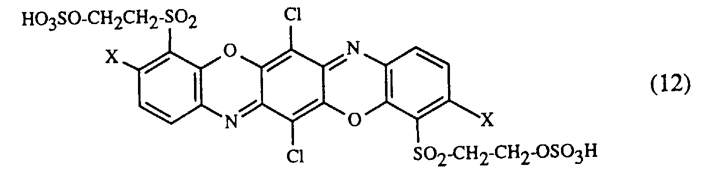 and 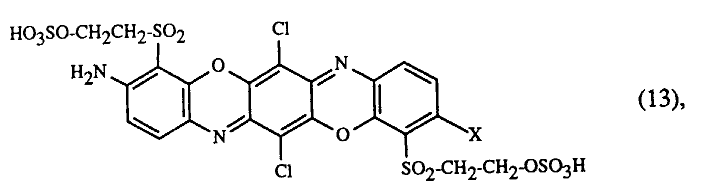 in which X is a radical of the formula 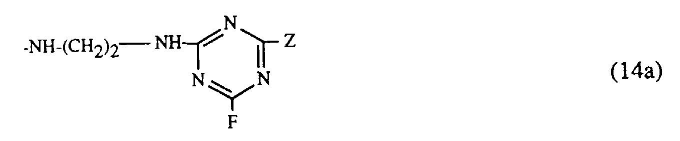 or 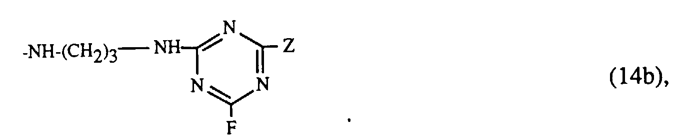 and Z is β-sulfatoethylamino, m-sulfophenylamino, p-sulfophenylamino, 2,4-disulfophenylamino or 2,5-disulfophenylamino.

8. A process for the preparation of a reactive dye mixture according to claim 1, which comprises subjecting a compound of the formula 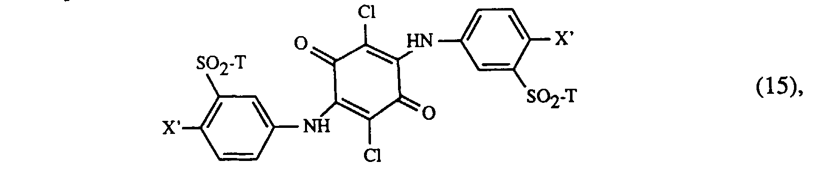 in which T is as defined in claim 1 and X' is a radical of the formula 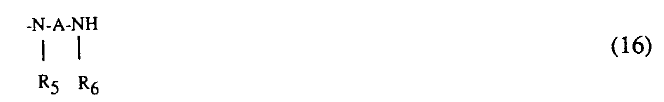 in which A, R₅ and R₆ are as defined in claim 1, to a cyclisation reaction in oleum at elevated temperature, and reacting the resulting mixture comprising the compounds of the formulae 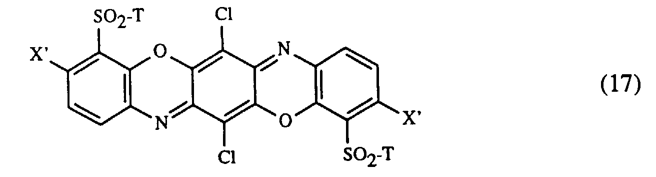 and 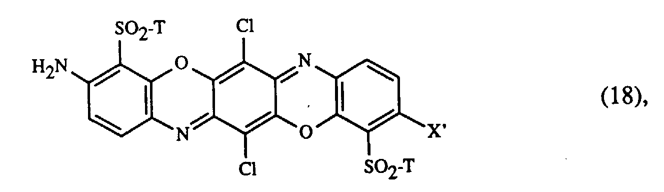 in which T and X' are as defined, with a compound of the formula 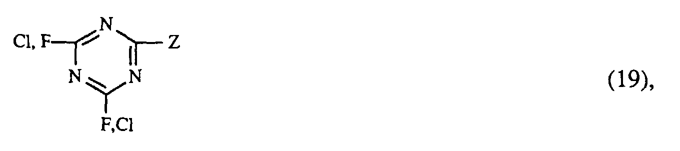 in which Z is as defined in claim 1, so that a mixture of reactive dyes according to claim 1 is formed.

9. A process according to claim 8, wherein a compound of the formula 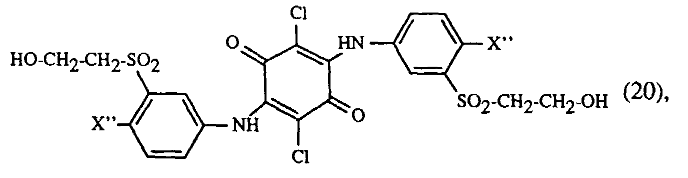 in which X" is a radical of the formula
-NH-(CH₂)₂-NH₂ (21a)
or
-NH-(CH₂)₃-NH₂ (21b)
is used as the starting substance, and the mixture comprising the compounds of the formulae 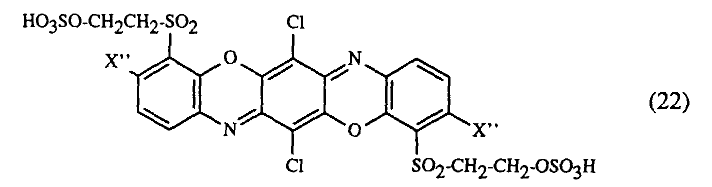 and 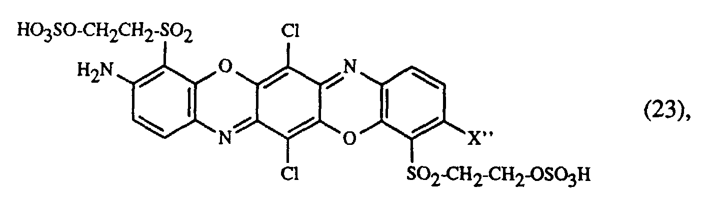 in which X" is as defined, obtained by cyclisation is subject to a condensation reaction with a compound of the formula 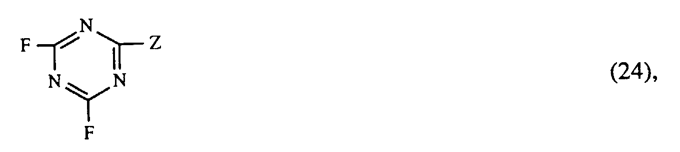 in which Z is β-sulfatoethylamino, m-sulfophenylamino, p-sulfophenylamino, 2,4-disulfophenylamino or 2,5-disulfophenylamino.

10. The use of a reactive dye mixture according to any one of claims 1 to 7 or of a reactive dye mixture obtainable according to either of claims 8 or 9 for dyeing and printing.

11. The use according to claim 10 for dyeing cellulose fibres.

## Revendications

1. Mélanges de colorants contenant des colorants réactifs de formule 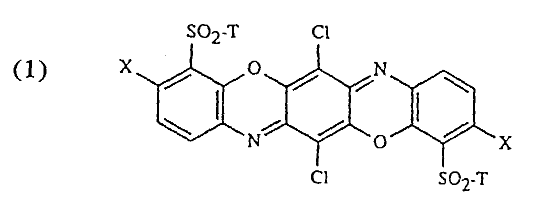 et 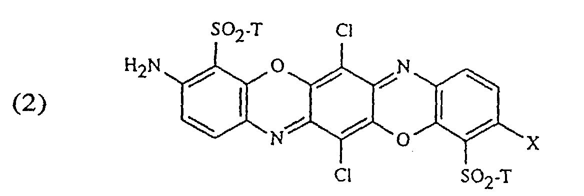 en un rapport en poids compris entre 10/90 et 90/10,
où T représente un résidu de formule
(6a) -CH₂-CH₂-OSO₃H
(6b) -CH₂-CH₂-SO₃H
(6c) -CH₂-CH₂-CH₂-OSO₃H
ou
(6d) -CH₂-CH₂-CH₂-CH₂-OSO₃H
X représente un résidu de formule 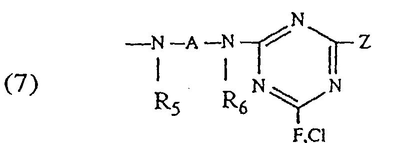
Z est un résidu -NH₂ ou un groupe amino substitué,
R₅ et R₆ représentent, indépendamment l'un de l'autre, un atome d'hydrogène ou un groupe alkyle en C₁₋₄ non substitué ou portant un substituant halogéno, hydroxy, cyano, sulfo ou sulfato, et
A est un groupe éthylène, 1,2-propylène, 1,3-propylène, 2-hydroxyl-1,3-propylène, 2-sulfato- 1,3-propylène, 1-phényl-1,3-propylène, 2-phényl-1,3-propylène, 2-(4'-sulfophényl)-1,3-propylène, 2-méthyl-1,3-propylène ou 1,4-butylène.

2. Mélanges de colorants réactifs conformes à la revendication 1 dans lesquels A est un groupe éthylène, 1,2-propylène, 1,3-propylène ou 2-sulfato-1,3-propylène.

3. Mélanges de colorants réactifs conformes à la revendication 1 ou 2 où X est un résidu de formule 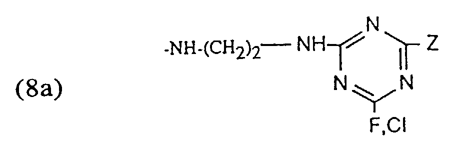 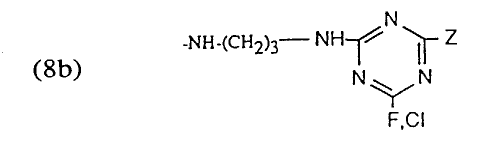 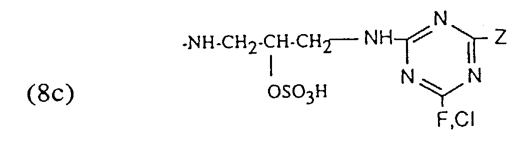 ou 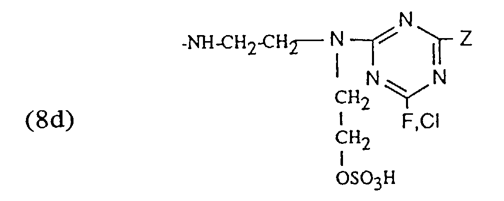 où Z représente un groupe -NH₂ ou un groupe amine substitué.

4. Mélanges de colorants réactifs conformes à une des revendications 1 à 3 dans lesquels Z représente un résidu -NH₂, alkylamino en C₁₋₄ pouvant être substitué par un groupe hydroxy ou sulfo, N,N-di-(alkyle en C₁₋₄)-amino éventuellement hydroxylé, phénylamino éventuellement substitué par un résidu alkyle en C₁₋₄, alcoxy en C₁₋₄, halogéno, hydroxy, uréido, acétylamino, carboy, sulfo ou sulfométhyle; N-(alkyle en C₁₋₄)-N-phénylamino pouvant porter, sur la partie alkyle, un substituant halogéno, cyano, hydroxy, carboxy, sulfo ou sulfato, et sur la partie phényle un substituant alkyle en C₁₋₄, alcoxy en C₁₋₄, halogéno, hydroxy, uréido, acétylamino, carboxy, sulfo ou sulfométhyle; sulfonaphtylamino ou morpholino.

5. Mélanges de colorants conformes à la revendication 4 dans lesquels Z représente un résidu de formule 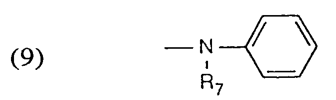 dans laquelle R₇ représente un atome d'hydrogène ou un groupe alkyle en C₁₋₄ pouvant porter un substituant halogéno, cyano, hydroxy, carboxy, sulfo ou sulfato, et le noyau phényle peut porter un résidu méthyle, méthoxy, éthoxy, chloro, hydroxy, uréido, acétylamino, carboxy ou sulfo.

6. Mélanges de colorants réactifs conformes à une des revendications 1 à 5 dans lesquels l'atome d'halogène sur le noyau triazine dans le résidu de formule (7), (8a), (8b), (8c) ou (8d) est un atome de fluor.

7. Mélanges de colorants réactifs conformes à la revendication 6, contenant les colorants réactifs de formule 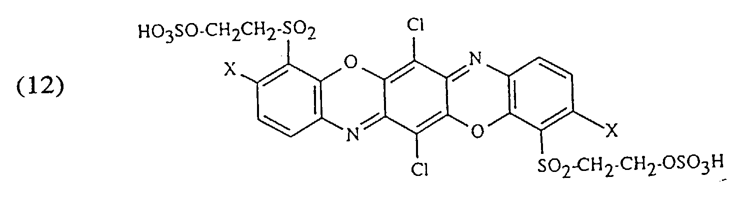 et 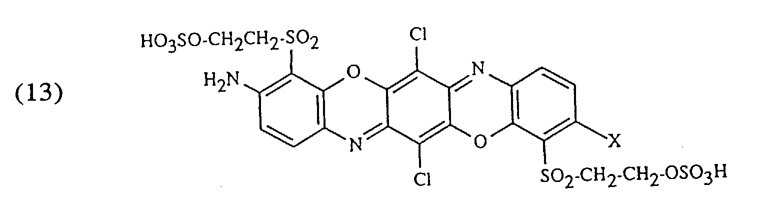 où X est un résidu de formule 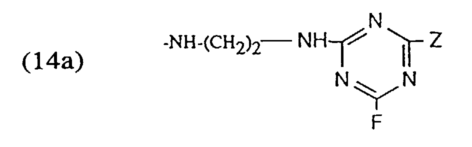 ou 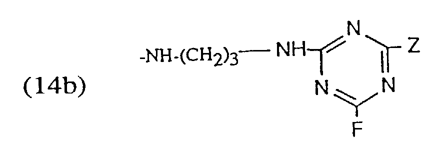 et Z est un groupe β-sulfatoéthylamino, m-sulfophénylamino, p-sulfophénylamino, 2,4-disulfophénylamino ou 2,5-disulfophénylamino.

8. Procédé pour la préparation de colorants réactifs conformes à la revendication 1, caractérisé en ce que l'on soumet un composé de formule 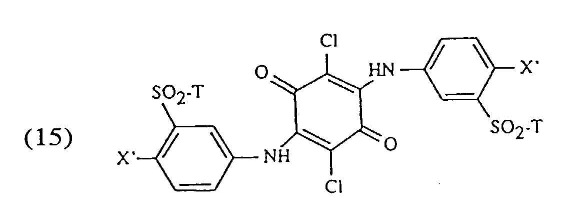 dans laquelle T a la signification indiquée dans la revendication 1 et X' est un résidu de formule 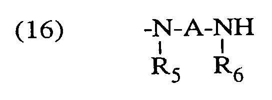 où A, R₅ et R₆ ont la signification indiquée dans la revendication 1, dans de l'oléum à température élevée à une réaction de cyclisation, et en ce que l'on fait réagir le mélange ainsi obtenu contenant les composés de formule 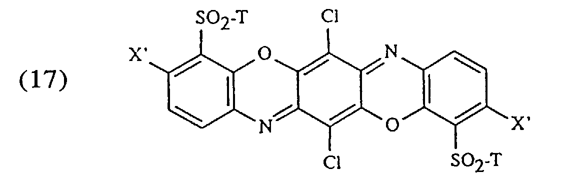 et 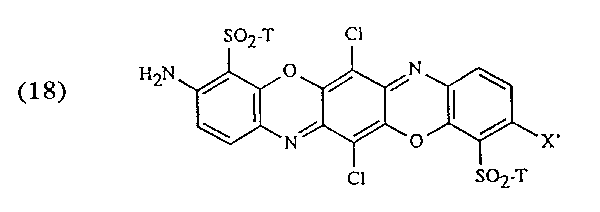 dans lesquelles T et X' ont la signification indiquée ci-dessus, avec un composé de formule 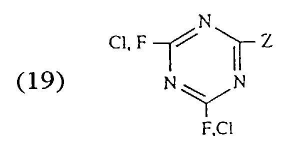 dans laquelle Z a la signification indiquée dans la revendication 1, ce qui aboutit à un mélange de colorants réactifs conforme à la revendication 1.

9. Procédé conforme à la revendication 8, caractérisé en ce que l'on part d'un composé de formule 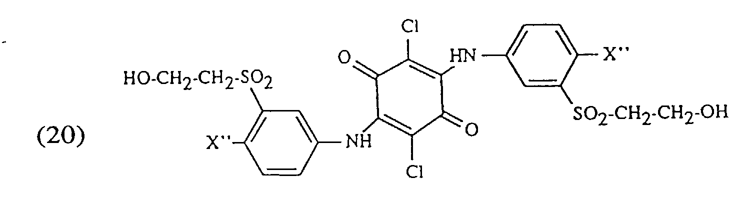 dans laquelle X" est un résidu de formule
(21a) -NH-(CH₂)₂-NH₂
ou
(21b) -NH-(CH₂)₃-NH₂
et en ce que l'on soumet le mélange obtenu après cyclisation contenant les composés de formule 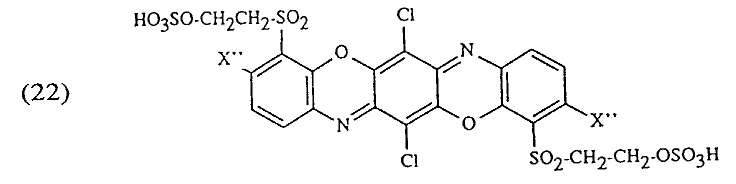 et 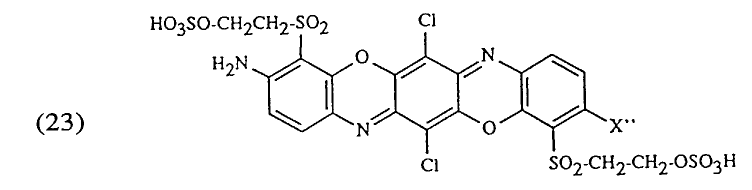 dans laquelle X" a la signification indiquée ci-dessus, à une réaction de condensation avec un composé de formule 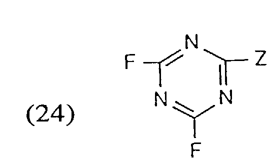 dans laquelle Z représente un groupe β-sulfatoéthylamino, m-sulfophénylamino, p-sulfophénylamino, 2,4-disulfophénylamino ou 2,5-disulfophénylamino.

10. Utilisation des mélanges de colorants réactifs conformes aux revendications 1 à 7 ou obtenus conformément aux revendications 8 et 9 pour la teinture et l'impression.

11. Utilisation conforme à la revendication 10 pour la teinture de fibres de cellulose.
